# FASCICULE DE BREVET EUROPEEN

(11) **EP 1 720 808 B1**
(45) Date de publication et mention de la délivrance du brevet: **04.08.2010**
(21) Numéro de dépôt: 05728106.5
(22) Date de dépôt: 23.02.2005
(51) Int. Cl.: C03C 17/42, C03C 23/00

(54) **SUBSTRAT, NOTAMMENT VERRIER, A SURFACE HYDROPHOBE, AVEC UNE DURABILITE AMELIOREE DES PROPRIETES HYDROPHOBES.**
SUBSTRAT, WIE GLASSUBSTRAT, MIT HYDROPHOBER OBERFLÄCHE UND VERBESSERTER DAUERHAFTIGKEIT HYDROPHOBER EIGENSCHAFTEN
SUBSTRATE, SUCH AS A GLASS SUBSTRATE, WITH A HYDROPHOBIC SURFACE AND IMPROVED DURABILITY OF HYDROPHOBIC PROPERTIES

(30) Priorité: 24.02.2004 FR 0450343
(43) Date de publication de la demande: 15.11.2006
(73) Titulaire: SAINT-GOBAIN GLASS FRANCE, 92400 Courbevoie (FR)
(72) Inventeur: DURAN, Maxime, C/O Saint-Gobain Recherche, F-93300 AUBERVILLEIRS (FR); HUIGNARD, Arnaud, C/O Saint-Gobain Recherche, F-93300 AUBERVILLEIRS (FR)
(74) Mandataire: Lucas, Francois
(86) Numéro de dépôt international: PCT/FR2005/050119
(87) Numéro de publication internationale: WO 2005/084943

(56) Documents cités:
- EP-A- 0 476 510
- EP-A- 0 497 189
- EP-A- 0 545 201
- EP-A- 0 799 873
- EP-A- 0 810 186
- EP-A- 0 985 741
- WO-A-98/40323

## Description

La présente invention porte sur un substrat, notamment verrier, dont la surface a été rendue hydrophobe avec une durabilité améliorée des propriétés hydrophobes.

Les propriétés hydrophobes sont recherchées pour les vitres et pare-brise dans le domaine du transport, en particulier pour les véhicules automobiles et les avions, ainsi que pour les vitrages dans le domaine du bâtiment.

Pour les applications appartenant au domaine du transport, on recherche des propriétés anti-pluie, les gouttes d'eau des pare-brise devant ainsi facilement rouler sur la paroi de verre pour s'évacuer, par exemple en marche sous l'effet de l'air et du vent, ce, dans le but d'améliorer la visibilité et, par conséquent, la sécurité, ou pour faciliter le nettoyage, enlever facilement le givre, etc...

Pour les applications du domaine du bâtiment, on recherche essentiellement une facilité de nettoyage.

A cet effet, on recherche un angle de contact d'une goutte d'eau avec le substrat qui soit supérieur à 60° ou 70°, la goutte d'eau ne devant pas s'écraser ou s'étaler. En effet, un vitrage est dit fonctionnel tant que cet angle est supérieur à 60° pour l'aviation et à 70° pour l'automobile. Toutefois, il convient en pratique de dépasser dans tous les cas la valeur de 90°, l'idéal étant d'obtenir un roulement des gouttes permettant d'évacuer l'eau si rapidement que l'on puisse se passer le plus possible de l'essuie-glace dans le domaine automobile.

Par ailleurs, l'amélioration des propriétés hydrophobes qui est ainsi recherchée ne doit pas se faire au détriment de la conservation des autres propriétés, telles que la tenue aux contraintes mécaniques : résistance à la friction tangentielle (test Opel, normalisé à sec), à l'abrasion (Taber), à l'essuyage par essuie-glace (test simulant les cycles de balayage de l'essuie-glace) ; la tenue aux contraintes climatiques (test WOM de résistance aux UVA ou Xenon test ; test QUV de résistance aux UVB pour les avions ; test BSN de résistance au brouillard salin neutre) ; la tenue aux contraintes chimiques : test de résistance aux détergents acides et basiques ; et les propriétés optiques.

Pour rendre un verre hydrophobe, il est connu de le recouvrir par une couche minérale de silice dense servant de primaire pour le greffage de molécules à propriétés hydrophobes, telles que des molécules de silanes fluorés. C'est ainsi que le brevet européen EP 0 545 201 décrit l'application d'une couche dense de SiO₂ appliquée par pulvérisation cathodique sous vide, assistée par champ magnétique (magnétron), ladite couche de SiO₂ étant par la suite recouverte d'un agent hydrophobe.

La Société déposante a découvert que les propriétés hydrophobes d'une telle structure pouvaient encore être améliorées, en particulier dans leur durabilité, avec au minimum conservation des autres propriétés évoquées ci-dessus, voire même parfois amélioration de celles-ci, si le revêtement de molécules à propriétés hydrophobes était appliqué alors que cette couche se trouve dans un état de surface activé, cette activation pouvant être produite mêmes de dépôt de la couche par un traitement spécifique d'activation.

La présente invention a donc d'abord pour objet un procéde de fabrication d'un substrat selon la revendication 1

La sous-couche peut être une sous-couche dure.

Le substrat est notamment constitué par, ou comprend dans sa partie destinée à porter ladite sous-couche minérale, une plaque, plane ou à faces courbes ou cintrées, de verre monolithique ou feuilleté, de matériau vitrocéramique ou d'une matière thermoplastique dure, telle que le polycarbonate. Le verre peut être un verre trempé. Un exemple de plaque cintrée est constitué par un pare-brise. Celui-ci peut être à l'état assemblé.

La sous-couche à teneur en silicium est notamment constituée par un composé choisi parmi SiOₓ avec x ≤ 2, SiOC, SiON, SiOCN et Si₃N₄, de l'hydrogène pouvant être combiné dans toutes proportions avec SiOₓ avec x ≤ 2, SiOC, SiON et SiOCN. Elle peut contenir de l'aluminium, en particulier jusqu'à 8 % en poids, ou encore du carbone, Ti, Zr, Zn et B.

On peut également citer les sous-couches constituées de vernis anti-rayures, tels que des polysiloxanes, qui ont été appliqués en revêtement sur des substrats de polycarbonate.

La sous-couche à teneur en silicium, à l'état activé de sa surface, a une épaisseur comprise notamment entre 20 nm et 250 nm, notamment entre 30 nm et 100 nm, en particulier entre 30 nm et 75 nm. Elle peut présenter une rugosité RMS comprise entre 0,1 nm et 40 nm, en particulier entre quelques nm et 30 nm. Elle peut présenter une surface développée réelle supérieure d'au moins 40% à la surface plane initiale. Elle peut présenter en microscopie MEB un aspect de pierre ponce ou d'îlots.

Par ailleurs, la sous-couche à teneur en silicium à l'état activé de sa surface a avantageusement une dureté telle qu'elle ne se délamine pas à 100 tours et, de préférence, jusqu'à 200 tours selon le test Taber.

L'agent hydrophobe peut être choisi parmi :
(a) les alkylsilanes de formule (I) :

   CH₃(CH₂)ₙSiRₘX₃₋ₘ (I)

   dans laquelle :
   - n vaut de 0 à 30, plus particulièrement de 0 à 18;
   - m = 0, 1, 2 ou 3 ;
   - R représente une chaîne organique éventuellement fonctionnalisée ;
   - X représente un reste hydrolysable tel qu'un reste OR⁰, avec R⁰ représentant hydrogène ou un reste alkyle linéaire, ramifié ou cyclique, notamment en C₁-C₈ ; ou un reste aryle, ou tel qu'un reste halogéno, par exemple chloro ;
(b) les composés à chaînes silicone greffées, comme par exemple (CH₃)₃SiO[Si(CH₃)₂O]_{q}, sans limitation particulière pour ce qui est de la longueur de chaîne (valeur de q) et de la méthode de greffage ;
(c) les silanes fluorés, par exemple les silanes fluorés de formule (II) :

   R¹-A-SiRₚ²X₃₋ₚ (II)

   dans laquelle :
   - R¹ représente un reste alkyle mono-, oligo- ou perfluoré, notamment en C₁-C₉ ; ou un reste aryle mono-, oligo- ou perfluoré ;
   - A représente un chaîne hydrocarbonée, éventuellement interrompue par un hétéroatome tel qu'O ou S ;
   - R² représente un reste alkyle linéaire, ramifié ou cyclique, notamment en C₁-C₈, ou un reste aryle ;
   - X représente un reste hydrolysable tel qu'un reste OR³, avec R³ représentant hydrogène ou un reste alkyle linéaire, ramifié ou cyclique, notamment en C₁-C₈ ; ou un reste aryle, ou tel qu'un reste halogéno, par exemple chloro ; et
   - p = 0, 1 ou 2.

Un exemple d'alkylsilane de formule (I) est l'octadécyltrichlorosilane (OTS).

Les agents hydrophobes préférés sont les silanes fluorés (c), en particulier ceux de formule (II), des exemples particuliers de ces derniers étant ceux de la formule :

CF₃-(CF₂)ₙ-(CH₂)₂-Si(R⁴)₃

dans laquelle :
- R⁴ représente un reste alkyle inférieur ; et
- n est compris entre 7 et 11.

La couche d'agent hydrophobe a notamment une épaisseur comprise entre 1 et 100 nm, de préférence entre 2 et 50 nm.

La couche de silane fluoré peut avoir une épaisseur massique de fluor greffé comprise entre 0,1 µg/cm² et 3,5 µg/cm², en particulier entre 0,2 µg/cm² et 3µg/cm².

La présente invention a ainsi pour objet, tel que précedement décrit un procédé de fabrication d'un substrat , caractérisé par le fait que l'on dépose, en au moins une passe, une couche de revêtement d'agent hydrophobe sur la surface d'une couche minérale à teneur en silicium formée au moins partiellement sur la surface du substrat, ledit dépôt d'agent hydrophobe s'effectuant alors que ladite surface se trouve à l'état activé.

.

On peut également obtenir une surface activée de la couche minérale à teneur en silicium en conduisant en au moins une passe un traitement d'activation.

On dépose avantageusement l'agent hydrophobe, dans un délai aussi court que possible, de préférence 1 seconde à 15 minutes après l'obtention de la surface activée.

On conduit une activation dans des conditions qui permettent d'effectuer la gravure de la couche à teneur en silicium, par l'utilisation d'un plasma d'au moins un gaz fluoré choisi parmi SF₆, CF₄, C₂F₆, et autres gaz fluorés, le cas échéant en combinaison avec de l'oxygène, l'oxygène pouvant représenter jusqu'à 50 % en volume du plasma de gravure.

Par ailleurs, conformément à la présente invention, on peut faire suivre l'activation conduite dans des conditions qui permettent d'effectuer la gravure de la couche à teneur en silicium par une activation qui ne réalise pas de gravure supplémentaire mais qui modifie encore la nature chimique et/ou l'état électrostatique de ladite couche.

On peut déposer la couche à teneur en silicium sur le substrat, à froid, par pulvérisation cathodique, sous vide, de préférence assistée par champ magnétique et/ou faisceaux d'ions, ou par PECVD à basse pression ou à pression atmosphérique ou encore à chaud par pyrolyse.

A titre d'exemples de dépôts de la sous-couche de SiO₂, on peut citer le mode de réalisation suivant lequel on dépose, une couche de SiO₂ sur verre nu ou pare-brise assemblé, par PECVD, en utilisant un mélange entre un précurseur, organique ou non ; contenant du silicium, tel que SiH₄, l'hexaméthyldisiloxane (HMDSO), le tétraéthoxysilane (TEOS) ou le 1,1,3,3-tétraméthyldisiloxane (TMDSO), un oxydant (O₂, NO₂, CO₂). L'activation ultérieure est conduite dans la même enceinte ou dans une enceinte séparée.

On peut effectuer le dépôt de la couche d'agent hydrophobe par chiffonnage, évaporation ou pulvérisation d'une solution contenant l'agent hydrophobe ou par trempage, centrifugation, enduction, « flow-coating », à partir d'une solution contenant l'agent hydrophobe.

Pour fabriquer des vitrages à revêtement hydrophobe selon la présente invention, on pourra utiliser entre autres l'une des trois méthodes générales suivantes :
(1) on dépose la sous-couche sur du verre sur une ligne de fabrication de verre par le procédé « float » alors que le verre est soutenu par le bain d'étain fondu ou en reprise, c'est-à-dire en sortie du bain d'étain fondu ; on conduit ensuite les opérations de transformation telles que bombage, trempe et/ou assemblage notamment par feuilletage, pour obtenir des plaques de verre mono- ou multi-feuilles revêtues de la sous-couche sur au moins une face, puis l'on réalise l'activation de la ou des sous-couches portées par lesdites plaques et, enfin, l'on réalise la fonctionnalisation par l'agent hydrophobe de la ou des sous-couches ainsi activées. Le dépôt de la sous-couche est généralement effectué par PECVD ou pulvérisation cathodique sous vide assistée par champ magnétique (procédé dit « magnétron ») ;
(2) on fabrique des feuilles de verre par le procédé « float », puis l'on transforme lesdites feuilles de verre par des opérations telles que bombage, trempe et/ou assemblage notamment feuilletage pour obtenir des plaques de verre mono- ou multi-feuilles, puis l'on dépose la sous-couche sur au moins une face des plaques ainsi obtenues, puis l'on conduit l'activation de la ou des sous-couches et ensuite la fonctionnalisation par l'agent hydrophobe de la ou des sous-couches ainsi activées ;
(3) on dépose la sous-couche sur au moins une face de feuilles de verre obtenues en sortie de procédé « float », on réalise la transformation de ces feuilles ainsi revêtues de la ou des sous-couches en se limitant aux techniques ne détériorant pas celle(s)-ci - ce qui exclut le bombage et la trempe comme techniques de transformation mais permet l'assemblage notamment le feuilletage -, puis que l'on conduit l'activation de la ou des sous-couches et ensuite la fonctionnalisation par l'agent hydrophobe de ladite ou desdites sous-couches ainsi activées.

La présente invention porte également sur un vitrage anti-pluie comportant un substrat tel que préparé par le procédé tel que défini ci-dessus. On peut citer les vitrages pour le bâtiment y inclus les vitrages pour cabines de douches ; les verres pour l'électroménager, notamment les plaques en vitrocéramique ; les vitrages pour les véhicules de transport, notamment l'automobile, l'aviation, en particulier les pare-brise, les vitres latérales, les lunettes arrière, les rétroviseurs, les toits, les optiques de phares et feux arrière ; les verres ophtalmiques.

Les Exemples suivants illustrent la présente invention sans toutefois en limiter la portée. Dans ces exemples, les abréviations suivantes ont été utilisées :
- PECVD :: déposition en phase gazeuse par procédé chimique, assistée par plasma (« Plasma Enhanced Chemical Vapour Deposition ») ;
- MEB :: Microscopie Electronique à Balayage ;
- AFM :: Microscopie à Force Atomique ; et
- BEA :: Banc d'Essuyage Aviation.

### EXEMPLE 1: Substrat à surface hydrophobe selon l'invention à sous-couche de silice formée par PECVD

### (a) Formation et caractérisation de la sous-couche dure de silice

Une couche mince de silice (SiO₂) a été déposée sur un verre propre (300 x 300 mm²) dans un réacteur PECVD basse pression. Avant chaque expérience, le vide résiduel de l'enceinte atteint est au moins égal à 5 mPa (5 x 10⁻⁵ mbar). Le mélange de gaz est ensuite introduit dans l'enceinte. Les gaz utilisés sont le silane pur (SiH₄), le protoxyde d'azote (N₂O) et l'hélium de dilution, dont les débits respectifs sont de 18 sccm, 60 sccm et 60 sccm. La pression totale dans le réacteur est alors régulée à 9,99 Pa (75 mTorr). A l'équilibre, on allume le plasma en polarisant le diffuseur de gaz avec une puissance radiofréquence (13,56 MHz) moyenne de 190 W (polarisation ∼45 V). La température du substrat est maintenue à 25°C. L'épaisseur de silice ainsi déposée après 270 s est de l'ordre de 50 nm.

L'état de surface de la silice PECVD observé par MEB est caractérisé par des petits grains d'une vingtaine de nanomètres, qui, par endroits, forment des surépaisseurs circulaires ou allongées et creuses en leur centre.

La dureté de la silice obtenue est caractérisée à l'aide des deux essais suivants :
- en premier lieu, on fait subir à la couche une abrasion, au cours de laquelle est mesuré le flou, selon la norme ISO 3537 ; il s'agit d'une abrasion de type Taber, effectuée au moyen de meules CS10F, avec application d'une force de 4,9N (500 g). Le degré d'abrasion est désigné par le nombre de tours Taber. Les flous mesurés sont indiqués dans le Tableau 1 ci-après ; et
- la dureté de la silice est en second lieu évaluée par la note Airco, valant 10-0,18 R, dans laquelle R est le nombre de rayures, après un nombre donné de tours Taber, dans un cadre de 2,54 cm x 2,54 cm, visibles sur une photo avec agrandissement x 50. Les notes Airco sont également indiquées dans le Tableau 1 ci-après.

**Tableau 1 : Caractérisation de la sous-couche de SiO₂**

| Etat d'abrasion à | Tours Taber | | | |
|---|---|---|---|---|
| | 50 | 100 | 200 | 300 |
| Flou | 0,55 | 1,01 | 1,58 | 1,75 |
| Airco | 7,48 | 7,48 | 6,76 | 5,86 |

Ces valeurs caractérisent une couche de SiO₂ dure.

### (b) Traitement par plasma

La couche de SiO₂ est ensuite soumise à un traitement plasma.

Comme pour les expériences de dépôt, on réalise à nouveau un vide résiduel de l'enceinte au moins égal à 5 mPa (5 x 10⁻⁵ mbar) avant d'introduire le mélange de gaz réactif. Les gaz utilisés pour le traitement de surface de la silice sont le C₂F₆ et l'oxygène dont les débits respectifs sont de 120 sccm et 20 sccm. La pression totale dans le réacteur est alors régulée à 26,66 Pa (200 mTorr). A l'équilibre, on allume le plasma en polarisant le diffuseur de gaz avec une puissance radiofréquence (13,56 MHz) moyenne de 200 W (polarisation -15 V), pendant une durée de 900 s à température ambiante.

Après 15 min. de traitement plasma (C₂F₆ + O₂), la couche de silice est très attaquée. Sa surface présente de grosses cloques de quelques dizaines de nanomètres. La micro-rugosité obtenue avec ce traitement plasma (gravure) très agressif a été caractérisée par AFM, rendant compte d'une rugosité apparente à l'échelle des molécules de silane fluoré greffées ultérieurement sur la silice.

Les principaux paramètres de la micro-rugosité de la silice PECVD mesurés par AFM sont indiqués dans le Tableau 2 ci-après.

**Tableau 2**

| Substrat | Δ_{Zmax.}* (nm) | Rᵣₘₛ (nm) | Surface développée (2 x 2 µm²) | Augmentation (%) |
|---|---|---|---|---|
| Verre plat | 0,5 | ∼ 0,2 | 4,1 | + 2,5 |
| SiO₂ | 10 | 1,657-2,116 | 4,431 | + 10,785 |
| SiO₂ gravée | 30 | 5,981-7,216 | 5,5 | + 37 |

| | | | | |
|---|---|---|---|---|
| * ΔZ_{max.} est l'amplitude maximale bosse-creux. | | | | |

### (c) Application de silane fluoré

Le traitement plasma de la surface de la silice PECVD terminé, les échantillons sont chiffonnés avec une composition élaborée de la manière suivante 12 heures auparavant (les pourcentages sont en poids).

On a mélangé 90% de propanol-2 et 10% de HCl 0,3 N dans l'eau.

On a ajouté une proportion, rapportée aux deux constituants précités, de 2% du composé de formule C₈F₁₇ (CH₂)₂Si (OEt)₃ (Et = éthyle)

Les quantités massiques de fluor greffées à la surface des différentes sous-couches, déterminées par microsonde électronique, sont :
- sur verre plat
   (avec sous-couche de primaire SiO₂ sol-gel) : 0,15 µg/cm²
- sur SiO₂ (PECVD) : 0,369 µg/cm²
- sur Si0₂ (PECVD) gravée : 1, 609 µg/cm².

La quantité de fluor greffé est remarquablement élevée sur la sous-couche de SiO₂ gravée.

### (d) Caractérisation du substrat hydrophobe obtenu

Les caractéristiques du substrat hydrophobe obtenu sont :
- Angle de goutte : µₑₐᵤ ≥ 105°
- Optique : T_{L} = 90,2% ; R_{L} 8,44% ; Absorption = 1,36%;
   Flou = 0,2%
- Volumes de décrochement : 13 µl à 90° et 22 µl à 45° (angles d'inclinaison du substrat par rapport à l'horizontale).

On soumet ensuite les trois types de substrats greffés par le silane fluoré ci-dessus, à deux types de tests mécaniques :
- test Taber avec une meule CS-10F avec une charge de 4,9 N (500 g) ;
- test Opel selon Norme Bâtiment En 1096-2 de Janvier 2001, consistant à appliquer sur une partie de la surface revêtue de 9,4 cm de longueur - cette partie étant appelée piste - un feutre de 14 mm de diamètre, 10 mm d'épaisseur et 0,52 g/cm² de masse volumique, sous une charge de 39,22 MPa (400 g/cm²), le feutre étant soumis à une translation (50 aller-retours sur toute la longueur de piste par minute) combinée à une rotation de 6 tours/min (1 cycle = 1 aller-retour).

Les résultats des tests Opel et Taber des couches PECVD gravées ou non en comparaison avec le verre plat sont rapportés dans le Tableau 3 ci-après.

**Tableau 3**

| | Opel (39,22 MPa - (0,4 kg/cm²)) | Tours Taber (CS-10F-4,9N (500 grs)) | |
|---|---|---|---|
| | 5000 cycles | 100 | 300 |
| Référence* | 95° ± 5° | 75° ± 5° | ≤ 60° |
| SiO_{2PECVD} | 87° ± 2° | 95° ± 1° | 83° ± 2° |
| SiO₂gravée | 95° ± 5° | 90° ± 1° | 74° ± 2° |

| | | | |
|---|---|---|---|
| *Echantillon préparé selon l'Exemple 5b de EP 799 873 B1 | | | |

La valeur de 87° au test Opel (5000 cycles) pour le cas de la sous-couche SiO₂ est insuffisante.

Seul le substrat à sous-couche SiO₂ gravée présente un bon compromis aux tests Opel et Taber (100 tours).

Ce substrat a donc été testé au BEA, consistant à y déplacer un essuie-glace d'avion sur une piste de 25 cm selon un mouvement transversal de 2 allers-retours par seconde, sous une charge de 0,88 N/cm (90 g/cm) sous aspersion d'eau de 6 1/h.

On mesure un angle moyen d'environ 80° ± 10° après 1 000 000 cycles, avec seulement 26% de zones non fonctionnelles (µₑₐᵤ < 60°). La limite de fonctionnalité a été mesurée à 1 400 000 cycles où l'angle moyen est d'environ 70° ± 10° avec plus de 35% de zones non-fonctionnelles.

Le substrat a également été évalué par les principaux tests climatiques accélérés :
- WOM ou Xenon test : irradiation de 0,55 w/m² à 340 nm ;
- QUV : 16 h d'UV-B (313 nm) à 70°C + 8 h à 40°C (> 95% d'humidité résiduelle)
- BSN : exposition à + 35°C, NaCl 50 g/l et pH 7 selon norme IEC 60 068, partie 2-11 Ka.

L'ensemble des résultats est regroupé dans le Tableau 4.

**Tableau 4**

| | WOM | | QUV | | BSN | |
|---|---|---|---|---|---|---|
| | 600 h | 2000 h | 1500 h | 3500 h | 2 sem. | 4 sem. |
| Référen ce* | 105° ± 5° | 95° ± 3° | 90° ± 5° | | 65° ± 15° | 65° ± 15° |
| SiO₂ gravée | 104° ± 5° | 102° ± 3° | 105° ± 5° | 95 ± 3° | 103° ± 15° | 103° ± 5° |

| | | | | | | |
|---|---|---|---|---|---|---|
| *Echantillon préparé selon l'Exemple 5b de EP 799 873 B1 | | | | | | |

Les sous-couches PECVD gravées permettent de maintenir, au test QUV, un µeau > 80° ± 6° après 7000 heures d'exposition, ainsi qu'un µₑₐᵤ > 96° ± 3 ° après 2800 heures d'exposition au WOM.

### EXEMPLE 2 : Substrat à surface hydrophobe selon l'invention 4 sous-couche de silice déposée par pulvérisation cathodique assistée par champ magnétique

### (a) Formation et caractérisation de la couche dure de silice

Cet exemple concerne le greffage de silane fluoré sur une sous-couche de SiO₂ préparée par pulvérisation cathodique assistée par champ magnétique sous pression réduite (magnétron).

Trois types de SiO₂ sont produits :
- SiO₂ sous pression de 200Pa (2 µbar), débits de 15 sccm d'Ar, 12 sccm d'O₂;
- SiO₂ sous pression de 400Pa (4 µbar), débits de 27 sccm d'Ar, 12 sccm d'O₂ ;
- SiO₂ sous pression de 800Pa (8 µbar), débits de 52 sccm d'Ar, 15 sccm d'O₂.

Le plasma est allumé en augmentant la puissance DC de 0 à 2000 W à raison de 20 W/s.

Une pré-pulvérisation consiste à appliquer pendant 3 min. une puissance de 2000 W DC avec pulsations 40 kHz et 4 µs entre les pulses.

On pulvérise une cible contenant 92% de silicium et 8% d'aluminium.

Pour obtenir en un passage un dépôt de 100 nm de SiO₂, les vitesses de défilement du substrat sous la cible sont de 5,75 cm/min (200 Pa - 2 µbar) , 5,73 cm/min (400 Pa - 4 µbar) et 5,53 cm/min (800 Pa - 8 µbar).

On évalue la dureté des couches SiO₂ magnétron - 200 Pa (2 µbar) et 800 Pa (8 pbar) - comme décrit pour les couches SiO₂ par PECVD ci-dessus : mesure du flou (en %) au cours d'une abrasion Taber (ISO 3537), note Airco.

Les résultats sont rapportés dans le Tableau 5 ci-après.

**Tableau 5**

| Etat d'abrasion mesuré à | | Tours Taber | | | |
|---|---|---|---|---|---|
| | | 50 | 100 | 200 | 300 |
| Flou (%) | SiO₂-200 Pa | 0,55 | 0,86 | 1,35 | 1,48 |
| | SiO₂-800 Pa | 0,68 | 0,99 | 1,48 | 1,69 |
| Airco | SiO₂-200 Pa | 7,84 | 7,87 | 7,48 | 7,3 |
| | SiO₂-800 Pa | 8,02 | 7,84 | 7,12 | 6,94 |

Ces couches SiO₂ préparées par magnétron sont dures.

### (b) Traitement par plasma

On attaque les silices magnétron 400 Pa (4 µbar) et 800 Pa (8 µbar) par plasma (230 W, 300 s) comme suit :
1) SiO₂-400 Pa (4 µbar) : 30% - 70% SF₆ sous 9,99 Pa (75 mTorr) ;
2) SiO₂-800 Pa (8µbar) : a) 20% O₂ - 80% C₂F₆ sous 26,66 Pa (200 mTorr) ; b) 50% O₂ - 50% C₂F₆ sous 26,66 Pa (200 mTorr).

### (c) Application de silane fluoré

On procède comme décrit en (c) de l'Exemple 1.

On soumet cinq échantillons à divers tests décrits précédemment :
I sous-couche SiO₂-400 Pa (4 µbar) traitée au plasma selon 1) ci-dessus, puis chiffonnée pour greffage de silane fluoré (comme décrit précédemment) ;
II sous-couche SiO₂-400 Pa (4 µbar) sans traitement au plasma, et chiffonnée en sortie de ligne magnétron de préparation de SiO₂ ;
III sous-couche SiO₂-800 Pa (8 µbar) traitée au plasma selon 2)a) ci-dessus, puis chiffonnée ;
IV sous-couche SiO₂-800 Pa (8 µbar) traitée au plasma selon 2)b) ci-dessus, puis chiffonnée ;
V sous-couche SiO₂-800 Pa (8 µbar) sans traitement au plasma, et chiffonnée en sortie de ligne magnétron de préparation de SiO₂.

Les résultats sont consignés dans le Tableau 6 ci-dessous :

**Tableau 6**

| Echantillon | Epaisseur gravée (mm) | Volume de décrochement d'eau (µl) | | θₑₐᵤ (°) | | | | % flou |
|---|---|---|---|---|---|---|---|---|
| | | à 45° | à 90° | initial | Opel (5000 cycles) | Taber (1000 tours) | BSN (3 sem.) | 1000 tours Taber |
| I | 25 | 24 | 14 | 109,5 | 101,6 | 92 | 108,3 | 1,09 |
| II | | | | 110,4 | 102,9 | 92,3 | | |
| III | 25 | 24 | 13 | 110,3 | 102,9 | 95 | 108,2 | |
| IV | 56 | 23 | 13 | 111,1 | 106,7 | 90,6 | 107,1 | |
| V | | | | 111 | 101,4 | 88,7 | | |

On constate des performances très élevées en général, et notamment de l'essai III au test Taber, et de l'essai IV en friction Opel.

### EXEMPLE 3

Cet exemple vise à comparer quatre verres hydrophobes :
VI *Echantillon préparé selon l'Exemple 5b de EP 799 873 B1;
VII sous-couche de SiO₂ par magnétron-800 Pa (8 µbar) (Exemple 2) traitée par un plasma de 70 sccm de SF₆, 30 sccm O₂ sous 9,99 Pa (75 mTorr), 230 W, 300 s, chiffonnage de silane fluoré ;
VIII sous-couche de SiO₂ par magnétron-400 Pa (4 µbar) (Exemple 2) traitée par un plasma de 50 sccm de C₂F₆, 50 sccm sous 26,66 Pa (200 mTorr), 230 W, 300 s, chiffonnage de silane fluoré ;
IX chiffonnage juste après la sortie de la fabrication de la silice magnétron 800 Pa (8 µbar).

On procède à différents essais sur les échantillons ainsi constitués, et l'on rassemble les résultats dans le Tableau 7 ci-après.

**Tableau 7**

| Echantillon | µₑₐᵤ (°) | | | | % zone dégradée (µeau<60°) |
|---|---|---|---|---|---|
| | initial | Taber (100 tours) | Opel (5000 cycles) | BEA (50000 cycles) | |
| VI | 109,6 | 88,4 | 104,7 | 104,8 | 1,0 |
| VII | 111,8 | 93 | 103,5 | 105,0 | 0,0 |
| VIII | 112,5 | 101,7 | 104,8 | 96,0 | 1,5 |
| IX | 112,2 | 86 | 108,1 | 96,4 | 5,5 |

Le pourcentage de zone dégradée (µₑₐᵤ < 60°) est apprécié après 50 000 cycles BEA.

Des échantillons VI à IX ayant subi 50 000 cycles BEA sont soumis à un test BSN pour certains d'entre eux, à un test QUV pour d'autres.

Les résultats sont consignés dans le Tableau 8 ci-après.

**Tableau 8**

| Echantillon | µₑₐᵤ | | | | | | |
|---|---|---|---|---|---|---|---|
| | BSN | | | | QUV | | |
| | Nombre de jours | | | | Nombre d'heures | | |
| | 0 | 3 | 20 | 50 | 0 | 1431 | 3187 |
| VI | 105,8 | 64,1 | 25,0 | | 99,0 | 89,0 | 87,0 |
| VII | 106,9 | 106,6 | 105,1 | 99,4 | 96,0 | 99,0 | 87,0 |
| VIII | 99,7 | 95,7 | 89,4 | 84,8 | 92,0 | 71,0 | 61,0 |
| IX | 97,8 | 99,8 | 90,5 | 84,1 | 96,0 | 79,0 | 65,0 |

Aux tests combinés BEA + BS, BEA + QUV, on constate une performance remarquable de l'échantillon VII.

Les échantillons VIII et IX sont un peu moins bons que le VII dans la combinaison de tests BEA + BS, et sensiblement moins bons dans la combinaison BEA + QUV, tout en étant déjà à un niveau élevé, inconnu avant la réalisation de l'invention.

### EXEMPLE 4

Dans cet exemple, est décrit un traitement particulier de sous-couches SiO₂ par magnétron 800 Pa (8 µbar).

Ce traitement comporte :
(1) Traitement de 5 min dans Ar, 80 sccm, 19,98 Pa (150 mTorr), 200 W (35 V de polarisation) pour réduire toute rugosité résiduelle.
(2) Traitement de surface flash : durée ≤ 60 s (= 60 s dans cet exemple).

   C₂F₆, SF₆, O₂, H₂;
(3) Chiffonnage

Les échantillons X à XV sont décrits ci-dessous par les caractéristiques de leur étape (2) de traitement.
- X :: 26,66 Pa (200 mTorr), 230 W, 50 sccm C₂F₆, 50 sccm O₂;
- XI :: comme X sauf 100 sccm C₂F₆ ;
- XII :: comme X sauf 70 sccm SF₆, 30 sccm O₂ ;
- XIII :: 9,99 Pa (75 mTorr), 203 W, 100 sccm SF₆ ;
- XIV :: 7,99 Pa (60 mTorr), 230 W, 100 sccm O₂ ;
- XV :: 13,33 Pa (100 mTorr), 230 W, 75 sccm H₂.

On évalue la quantité de fluor [F] greffé par microsonde électronique, puis on réalise un test Opel de résistance à la friction. Les résultats sont rapportés dans le Tableau 9 ci-après.

**Tableau 9**

| Echantillon | Epaisseur gravée (nm) | Fluor greffé (µg/cm²) | µₑₐᵤ | | |
|---|---|---|---|---|---|
| | | | initial | Opel (5000 cycles) | Opel (15000 cycles) |
| X | 10 | 0,9 | 109,3 | 102 | 93,9 |
| XI | < 5 | 0,4 | 104,1 | 105,5 | 103,3 |
| XII | 16 | 0,8 | 110,6 | 103,7 | 93,6 |
| XIII | | 0,4 | 105 | 104,6 | 100 |
| XIV | < 5 | 0,3 | 106,9 | 103 | 101,8 |
| XV | < 5 | 0,4 | 111,9 | 103,9 | 103,3 |

Ces résultats montrent que la résistance à la friction n'est pas directement corrélée à la quantité de fluor greffé, ni à la rugosité de la sous-couche (les épaisseurs gravées étant inférieures ou égales à 16 nm, l'augmentation de la rugosité générée par le processus de gravure est dans ce cas négligeable). En revanche, le mode de greffage du fluor joue un rôle qui dépend du traitement de surface.

L'invention a été décrite en utilisant le mot « substrat ». Il est entendu que ce substrat peut être un substrat nu, mais qu'il peut aussi s'agir d'un substrat portant déjà des fonctionnalités ajoutées autres que la fonctionnalité anti-pluie, notamment grâce à des couches, et dans certains cas, la sous-couche selon l'invention peut alors faire déjà partie des couches apportant ces autres fonctionnalités.

## Revendications

1. Procède de fabrication d'un substrat dont au moins une partie de la surface a été rendue hydrophobe et présentant à cet effet une structure de surface hydrophobe comprenant une sous-couche essentiellement minérale à teneur en silicium formée au moins partiellement sur la surface du substrat et une couche extérieure d'agent hydrophobe greffé sur ladite sous-couche, procédé dans lequel ladite sous-couche a reçu la couche extérieure d'agent hydrophobe alors qu'elle présentait une surface qui se trouvait dans un état activé avant d'être mise en contact avec ledit agent hydrophobe, ledit procédé **se caractérisant ;**
- **en ce qu'**on obtient une surface activée de la couche minérale à teneur en silicium en conduisant en au moins une passe un traitement spécifique d'activation, la couche de revêtement d'agent hydrophobe étant ensuite déposée, en au moins une passe, sur la surface à l'état activé de la couche minérale à teneur en silicium formée au moins partiellement sur la surface du substrat et
- **en ce qu'**on conduit ladite activation dans des conditions qui permettent d'effectuer la gravure de la couche à teneur en silicium, par l'utilisation d'un plasma d'au moins un gaz fluoré choisi parmi SF₆, CF₄, C₂F₆ et autres gaz fluorés, le cas échéant en combinaison avec de l'oxygène, l'oxygène pouvant représenter jusqu'à 50% en volume du plasma de gravure.

2. Procédé selon la revendication 1, dans lequel le dépôt de l'agent hydrophobe étant effectué dans un délai aussi court que possible, de préférence 1 seconde à 15 minutes, après l'obtention de la surface activée.

3. Procédé selon l'une des revendications 1 ou 2, **caractérisé par le fait que** l'on fait suivre l'activation conduite dans des conditions qui permettent d'effectuer la gravure de la couche à teneur en silicium par une activation qui ne réalise pas de gravure supplémentaire mais qui modifie encore la nature chimique et/ou l'état électrostatique de ladite couche.

4. Procédé selon l'une des revendications précédentes, **caractérisé par le fait que** l'on dépose la couche à teneur en silicium sur le substrat, à froid, par pulvérisation cathodique, sous vide, de préférence assistée par champ magnétique et/ou faisceaux d'ions, ou par déposition en phase vapeur par procédé chimique, assistée par plasma (PECVD) à basse pression ou à pression atmosphérique.

5. Procédé selon la revendication 4, **caractérisé par le fait que** l'on dépose, comme couche à teneur en silicium, une couche de SiO₂ par PECVD, en utilisant un mélange entre un précurseur, organique ou non, contenant du silicium, tel que SiH₄, l'hexaméthyldisiloxane, le tétraéthoxysilane et le tétraméthyldisiloxane et un oxydant, l'activation ultérieure étant conduite dans la même enceinte ou dans une enceinte séparée.

6. Procédé selon l'une des revendications précédentes, **caractérisé par le fait qu'**on effectue le dépôt de la couche de silane fluoré par chiffonnage, évaporation ou pulvérisation d'une solution contenant le silane fluoré ou par trempage, centrifugation, enduction, «flow-coating», à partir d'une solution contenant le silane fluoré.

7. Procédé selon l'une des revendications précédentes, dans lequel le substrat est constitué par une plaque, plane ou à faces courbes ou cintrées, de verre monolithique ou feuilleté, de matériau vitrocéramique ou d'une matière thermoplastique dure, telle que le polycarbonate.

8. procédé selon l'une des revendications précédentes, dans lequel ladite sous-couche est constituée par un composé choisi parmi SiOₓ avec x < 2, SiOC, SiON, SiOCN et Si₃N₄, de l'hydrogène pouvant être combiné dans toutes proportions avec SiOx avec x < 2, SiOC, SiON et SiOCN.

9. Procédé selon l'une des revendications précédentes, dans lequel la sous-couche à teneur en silicium contient de l'aluminium, en particulier jusqu'à 8 % en poids, ou encore du carbone, Ti, Zr, Zn et B.

10. Procédé selon l'une des revendications précédentes, dans lequel que la sous-couche à teneur en silicium, à l'état activé de sa surface, a une épaisseur comprise entre 20 nm et 250 nm, notamment entre 30 nm et 100 nm, en particulier entre 30 nm et 75 nm.

11. Procédé selon l'une des revendications précédentes, dans lequel la sous-couche à teneur en silicium présente à l'état activé de sa surface une rugosité RMS comprise entre 0,1 nm et 40 nm, en particulier entre quelques nm et 30 nm.

12. Procédé selon l'une des revendications précédentes, dans lequel la sous-couche à teneur en silicium à l'état activé de sa surface présente une surface développée réelle supérieure d'au moins 40% à la surface plane initiale.

13. Procédé selon l'une des revendications précédentes, dans lequel la couche extérieure d'agent hydrophobe est à base d'un agent hydrophobe choisi parmi:
(a) les alkylsilanes de formule (I):
CH₃(CH₂)ₙSiRₘX₃₋ₘ (I)
dans laquelle:
- n vaut de 0 à 30, plus particulièrement de 0 à 18;
- m = 0, 1, 2 ou 3;
- R représente une chaîne organique éventuellement fonctionnalisée;
- X représente un reste hydrolysable tel qu'un reste OR⁰, avec R⁰ représentant hydrogène ou un reste alkyle linéaire, ramifié ou cyclique, notamment en C₁-C₈; ou un reste aryle, ou tel qu'un reste halogène, par exemple chloro;
(b) les composés à chaînes silicone greffées;
(c) les silanes fluorés, tels que ceux de formule (II):
R¹ - A - SiRₚ²X₃₋ₚ (II)
- R¹ représente un reste alkyle mono-, oligo- ou perfluoré, notamment en C1-C9; ou un reste aryle mono-, oligo- ou perfluoré;
- A représente un chaîne hydrocarbonés, éventuellement interrompue par un hétéroatome tel qu'O ou S;
- R² représente un reste alkyle linéaire, ramifié ou cyclique, notamment en C₁-C₈, ou un reste aryle, X représente un reste hydrolysable tel qu'un reste - OR³, avec R³ représentant hydrogène ou un reste alkyle linéaire, ramifié ou cyclique, notamment en C₁-C₈; ou un reste aryle, ou tel qu'un reste halogène, par exemple chloro; et
- p = 0, 1 ou 2.

14. Procédé selon l'une des revendications précédentes, dans lequel la couche d'agent hydrophobe a une épaisseur comprise entre 1 et 100 nm, de préférence entre 2 et 50 nm.

15. Procédé selon l'une des revendications précédentes, dans lequel la couche d'agent hydrophobe a une épaisseur massique de fluor greffé comprise entre 0,1 µg/cm² et 3,5 µg/cm².

## Claims

1. Process for manufacturing a substrate, at least one part of the surface of which has been rendered hydrophobic, having for this purpose a hydrophobic surface structure comprising an essentially mineral silicon-containing sublayer formed at least partly on the surface of the substrate, and an outer layer of hydrophobic agent grafted onto said sublayer, in which process said sublayer has received the outer layer of hydrophobic agent although it had a surface that was in an activated state before being brought into contact with said hydrophobic agent, said process being **characterized in that**:
- an activated surface of the silicon-containing mineral layer is obtained by carrying out an activation treatment in at least one pass, the coating layer of hydrophobic agent then being deposited, in at least one pass, on the surface, in the activated state, of the silicon-containing mineral layer formed at least partly on the surface of the substrate and
- said activation treatment is carried out under conditions that allow a silicon-containing layer to be etched, by the use of a plasma of at least one fluorine-containing gas chosen from SF₆, CF₄, C₂F₆ and other fluorinated gases, where appropriate combined with oxygen, it being possible for the oxygen to represent up to 50% by volume of the etching plasma.

2. Process according to Claim 1, in which the hydrophobic agent is deposited within the shortest possible time, preferably between 1 second and 15 minutes, after the activated surface has been obtained.

3. Process according to either of Claims 1 and 2, **characterized in that** the activation carried out under conditions that allow the silicon-containing layer to be etched by an activation treatment, which does not cause additional etching but does still modify the chemical nature and/or the electrostatic state of said layer, is monitored.

4. Process according to one of the preceding claims, **characterized in that** the silicon-containing layer is deposited, cold, on the substrate by vacuum cathode sputtering, preferably magnetron sputtering and/or ion beam sputtering, or by low-pressure or atmospheric-pressure PECVD (plasma-enhanced chemical vapour deposition).

5. Process according to Claim 4, **characterized in that** a layer of SiO₂ is deposited, as silicon-containing layer, by PECVD, using a mixture of an organic or nonorganic, silicon-containing precursor, such as SiH₄, hexamethyldisiloxane, tetraethoxysilane and tetramethyldisiloxane, and an oxidizer, the subsequent activation being carried out in the same chamber or in a separate chamber.

6. Process according to one of the preceding claims, **characterized in that** the fluorosilane layer is deposited by wiping-on, evapouration or spraying of a solution containing the fluorosilane, or by dipping, spin-coating, flow-coating, etc., using a solution containing the fluorosilane.

7. Process according to one of the preceding claims, in which the substrate is formed by a plate, whether plane or with curved faces, of monolithic or laminated glass, of glass-ceramic or of a hard thermoplastic, such as polycarbonate.

8. Process according to one of the preceding claims, in which said sublayer is formed by a compound chosen from SiOₓ, where x < 2, SiOC, SiON, SiOCN and Si₃N₄, it being possible for hydrogen to be combined in all proportions with SiOₓ, where x < 2, SiOC, SiON and SiOCN.

9. Process according to one of the preceding claims, in which the silicon-containing sublayer contains aluminum, in particular up to 8% by weight, or carbon, Ti, Zr, Zn and B.

10. Process according to one of the preceding claims, in which the silicon-containing sublayer when its surface is in the activated state has a thickness of between 20 nm and 250 nm, especially between 30 nm and 100 nm and in particular between 30 nm and 75 nm.

11. Process according to one of the preceding claims, in which the silicon-containing sublayer has, when its surface is in the activated state, an RMS roughness of between 0.1 nm and 40 nm, in particular between a few nm and 30 nm.

12. Process according to one of the preceding claims, in which the silicon-containing sublayer when its surface is in the activated state has an actual developed area at least 40% greater than the initial plane area.

13. Process according to one of the preceding claims, in which the outer layer of hydrophobic agent is based on a hydrophobic agent chosen from:
(a) alkylsilanes of formula (I):
CH₃(CH₂)ₙSiRₘX₃₋ₘ (I)
in which:
- n ranges from 0 to 30, more particularly from 0 to 18;
- m = 0, 1, 2 or 3;
- R represents an optionally functionalized organic chain; and
- X represents a hydrolysable residue, such as an OR⁰ residue, where R⁰ represents hydrogen; or a linear, branched or cyclic, especially C₁-C₈, alkyl residue; or an aryl residue; or such as a halo, for example chloro, residue;
(b)compounds with grafted silicone chains;
(c)fluorosilanes, such as those of formula (II):
R¹-A-SiRₚ²X₃₋ₚ (II)
in which:
- R¹ represents an especially C₁-C₉ monofluoroalkyl, oligofluoroalkyl or perfluoroalkyl residue; or a monoaryl, oligoaryl or perfluoroaryl residue;
- A represents a hydrocarbon chain, optionally interrupted by a heteroatom such as O or S;
- R² represents a linear, branched or cyclic, especially C₁-C₈, alkyl residue, or an aryl residue; X represents a hydrolysable residue, such as an OR³ residue, where R³ represents hydrogen or a linear, branched or cyclic, especially C₁-C₈, alkyl residue; or an aryl residue; or such as a halo, for example chloro, residue; and
- p = 0, 1 or 2.

14. Process according to one of the preceding claims, in which the layer of hydrophobic agent has a thickness of between 1 and 100 nm, preferably between 2 and 50 nm.

15. Process according to one of the preceding claims, in which the layer of hydrophobic agent has a weight per unit area of grafted fluorine of between 0.1 µg/cm² and 3.5 µg/cm².

## Patentansprüche

1. Verfahren zur Herstellung eines Substrats, wovon mindestens ein Teil der Oberfläche hydrophob gemacht worden ist und dazu eine hydrophobe Oberflächenstruktur aufweist, die eine im Wesentlichen anorganische siliciumhaltige Unterschicht, die wenigstens teilweise auf der Substratoberfläche ausgebildet worden ist, und eine Deckschicht aus einem hydrophoben Mittel, das auf diese Unterschicht gepfropft worden ist, umfasst, wobei die Unterschicht die aus dem hydrophoben Mittel bestehende Deckschicht aufgenommen hat, während sie eine Oberfläche aufwies, die sich in einem aktivierten Zustand befunden hatte, bevor sie mit dem hydrophoben Mittel in Berührung gebracht wurde, und das Verfahren **dadurch gekennzeichnet ist, dass**
- die aktivierte Oberfläche der anorganischen siliciumhaltigen Schicht erhalten wird, indem in mindestens einem Durchlauf eine spezielle Aktivierungsbehandlung durchgeführt wird, wobei die Deckschicht aus dem hydrophoben Mittel anschließend in mindestens einem Durchlauf auf die im aktivierten Zustand befindliche Oberfläche der anorganischen siliciumhaltigen Schicht aufgebracht wird, die wenigstens teilweise auf der Substratoberfläche ausgebildet worden ist, und dass
- diese Aktivierung unter Bedingungen durchgeführt wird, die es erlauben, das Ätzen der siliciumhaltigen Schicht durch die Verwendung eines Plasmas aus mindestens einem fluorierten Gas, das aus SF₆, CF₄, C₂F₆ und anderen fluorierten Gasen ausgewählt ist, gegebenenfalls zusammen mit Sauerstoff, der bis zu 50 Vol.-% des Ätzplasmas ausmachen kann, durchzuführen.

2. Verfahren nach Anspruch 1, bei welchem das Aufbringen des hydrophoben Mittels mit einer Verzögerung, die so kurz wie möglich ist, und vorzugsweise 1 Sekunde bis 1 Minuten nach dem Erhalten der aktivierten Oberfläche durchgeführt worden ist.

3. Verfahren nach Anspruch 1 oder 2, **dadurch gekennzeichnet, dass** auf die Aktivierung, die unter Bedingungen durchgeführt worden ist, die es erlauben, das Ätzen der siliciumhaltigen Schicht durchzuführen, eine Aktivierung folgen gelassen wird, die kein ergänzendes Ätzen darstellt, sondern den chemischen Charakter und/oder elektrostatischen Zustand dieser Schicht weiter modifiziert.

4. Verfahren nach einem der vorhergehenden Ansprüche, **dadurch gekennzeichnet, dass** die siliciumhaltige Schicht durch Vakuumkathodenzerstäubung, die vorzugsweise von einem Magnetfeld und/oder Ionenstrahlen unterstützt wird, im Kalten oder durch ein chemisches Verfahren, das von einem Plasma (PECVD) unterstützt wird, bei niedrigem oder Atmosphärendruck in der Dampfphase auf das Substrat aufgebracht wird.

5. Verfahren nach Anspruch 4, **dadurch gekennzeichnet, dass** als siliciumhaltige Schicht eine SiO₂-Schich durch PECVD aufgebracht wird, indem ein Gemisch aus einem siliciumhaltigen, gegebenenfalls organischen Vorläufer wie SiH₄, Hexamethyldisiloxan, Tetraethoxysilan und Tetramethyldisiloxan und einem Oxidationsmittel verwendet wird, wobei die spätere Aktivierung in demselben oder einem getrennten Behälter durchgeführt wird.

6. Verfahren nach einem der vorhergehenden Ansprüche, **dadurch gekennzeichnet, dass** das Aufbringen der Fluorsilanschicht durch Aufstreichen, Aufdampfen oder Zerstäuben einer das Fluorsilan enthaltenden Lösung oder durch Tauchen, Zentrifugieren, Auftragen und Flutbeschichten einer das Fluorsilan enthaltenden Lösung durchgeführt wird.

7. Verfahren nach einem der vorhergehenden Ansprüche, bei welchem das Substrat aus einer planen oder mit gebogenen bzw. gekrümmten Seiten versehenen Scheibe aus einem Einscheiben- bzw. Verbundglas, aus glaskeramischem oder einem harten thermoplastischen Material wie einem Polycarbonat gebildet ist.

8. Verfahren nach einem der vorhergehenden Ansprüche, bei welchem die Unterschicht aus einer Verbindung gebildet wird, die aus SiOₓ, mit x < 2, SiOC, SiON, SiOCN und Si₃N₄ ausgewählt ist, wobei Wasserstoff in allen Verhältnissen SiOₓ, mit x < 2, SiOC, SiON und SiOCN zugesetzt werden kann.

9. Verfahren nach einem der vorhergehenden Ansprüche, bei welchem die siliciumhaltige Unterschicht Aluminium, insbesondere bis zu 8 Gew.-%, oder auch Kohlenstoff, Ti, Zr, Zn und B enthält.

10. Verfahren nach einem der vorhergehenden Ansprüche, bei welchem die Dicke der siliciumhaltigen Unterschicht im aktivierten Oberflächenzustand 20 bis 250 nm, insbesondere zwischen 30 und 100 nm, und speziell zwischen 30 und 75 nm beträgt.

11. Verfahren nach einem der vorhergehenden Ansprüche, bei welchem die Rauhtiefe RMS der siliciumhaltigen Unterschicht im aktivierten Oberflächenzustand 0,1 bis 40 nm und insbesondere zwischen einigen nm und 30 nm beträgt.

12. Verfahren nach einem der vorhergehenden Ansprüche, bei welchem die siliciumhaltige Unterschicht im aktivierten Oberflächenzustand eine tatsächliche abgewickelte Oberfläche aufweist, die um mindestens 40 % größer als die ursprüngliche plane Oberfläche ist.

13. Verfahren nach einem der vorhergehenden Ansprüche, bei welchem die Deckschicht aus einem hydrophoben Mittel auf der Basis eines hydrophoben Mittels ist, das aus:
a) Alkylsilanen mit der Formel (I):
CH₃(CH₂)ₙSiRₘX₃₋ₘ (I),
in welcher:
- n 0 bis 30 und insbesondere 0 bis 18 und
- m 0, 1, 2 oder 3 beträgt und
- R eine gegebenenfalls funktionalisierte organische Kette und
- X einen hydrolysierbaren Rest wie einen OR⁰-Rest, wobei R⁰ Wasserstoff oder einen geradkettigen, verzweigten oder cyclischen Alkylrest, insbesondere C₁- bis C₈-Alkylrest, bzw. einen Arylrest bedeutet, oder einen Halogenrest, beispielsweise Chlorrest, bedeutet,
b) Verbindungen mit aufgepfropften Siliconketten und
c) Fluorsilanen wie denjenigen mit der Formel (II):
R¹-A-SiR²ₚX₃₋ₚ (II),
wobei
- R¹ einen mono-, oligo- bzw. perfluorierten Alkylrest, insbesondere C₁- bis C₉-Alkylrest, oder einen mono-, oligo- bzw. perfluorierten Arylrest,
- A eine Kohlenwasserstoffkette, die gegebenenfalls durch ein Heteroatom wie O oder S unterbrochen ist,
- R² einen geradkettigen, verzweigten oder cyclischen Alkylrest, insbesondere C₁- bis C₈-Alkylrest, bzw. einen Arylrest, X einen hydrolysierbaren Rest wie einen OR³-Rest, wobei R³ Wasserstoff, einen geradkettigen, verzweigten oder cyclischen Alkylrest, insbesondere C₁- bis C₈-Alkylrest, oder einen Arylrest bedeutet, oder einen Halogenrest, beispielsweise Chlorrest, und
- p 0, 1 oder 2 bedeutet,
ausgewählt ist.

14. Verfahren nach einem der vorhergehenden Ansprüche, bei welchem die Dicke der Schicht aus einem hydrophoben Mittel 1 bis 100 nm und vorzugsweise zwischen 2 und 50 nm beträgt.

15. Verfahren nach einem der vorhergehenden Ansprüche, bei welchem das Flächengewicht des aufgepfropften Fluors der Schicht aus einem hydrophoben Mittel 0,1 bis 3,5 µg/cm² beträgt.
